(19) Europäisches Patentamt
European Patent Office
Office européen des brevets

(11) EP 0 818 495 B1

(12) EUROPÄISCHE PATENTSCHRIFT

(45) Veröffentlichungstag und Bekanntmachung des Hinweises auf die Patenterteilung:
**13.01.1999 Patentblatt 1999/02**

(51) Int Cl.[6]: **C08G 77/388**, C08G 77/26, C08G 77/46

(21) Anmeldenummer: **97111717.1**

(22) Anmeldetag: **10.07.1997**

(54) **Hydrophile, permanente Organosiliciumverbindungen**

Hydropholic permanent organosilicon compounds

Composés organosiliciques hydrophiles permanentes

(84) Benannte Vertragsstaaten:
**AT BE DE FR GB IT NL**

(30) Priorität: **11.07.1996 DE 19628018**

(43) Veröffentlichungstag der Anmeldung:
**14.01.1998 Patentblatt 1998/03**

(73) Patentinhaber: **Wacker-Chemie GmbH**
**81737 München (DE)**

(72) Erfinder:
- **Dauth, Jochen, Dr.**
  **84489 Burghausen (DE)**
- **Mahr, Günter, Dr.**
  **84489 Burghausen (DE)**
- **Deubzer, Bernward, Dr.**
  **84489 Burghausen (DE)**
- **Gratzl, Petra**
  **84577 Tuessling (DE)**
- **Lautenschlager, Hans-Jürgen, Dr.**
  **84533 Haiming (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:
**EP-A- 0 628 591**
**US-A- 2 949 434**
**US-A- 5 185 445**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Oxyalkylengruppen aufweisende Organosiliciumverbindungen, ein Verfahren zu ihrer Herstellung und ihre Verwendung.

Hydrophobe Organopolysiloxane mit substituierten 1.3.5-Triazin-Einheiten sind bereits bekannt. Beispielsweise wird in US 2,949,434 (veröffentlicht am 16. August 1960, Bailey und Pike, UCC) eine Reihe von Organopolysiloxanen mit Dichlortriazineinheiten, dargestellt durch Umsetzung von amingruppenhaltigen Organopolysiloxanen mit Cyanurchlorid, beschrieben.

Hydrophobe Organopolysiloxane mit Triazin-Einheiten sind in der EP 628 591 A2 (offengelegt am 28. Mai 1994, Chrobaczek, Pfersee Chemie GmbH) aufgezeigt.

Siloxan-Oxyalkylen-Copolymere sind in der Patentliteratur vielzahlig bekannt. Vernetzbare hydrophile Weichmacher werden z.B. in der EP 470 613 A1 (veröffentlicht am 08. August 1991, Czech, UCC) und EP 32310 (veröffentlicht am 22. Dezember 1980, Pines, UCC) für die Textilausrüstung in Anspruch genommen.

Gemäß DE 33 38 663 C1 (angemeldet am 25. Oktober 1983, Rott, Th. Goldschmidt AG) werden siliciumorganische Verbindungen der o.g. Struktur zur Textilfaserpräparation erhalten.

Ein Verfahren zur Herstellung von Siloxan-Oxyalkylen-Copolymeren ist in US 5,159,096 (veröffentlicht am 30. September 1991, Austin, UCC) beschrieben. Die Verwendung von Silikon-Organo-Copolymeren in wäßriger Emulsion ist in US 4,584,337 (veröffentlicht am 18. Dezember 1984, Lee, Dow Corning) beschrieben.

Es bestand die Aufgabe hydrophile Organopolysiloxan-Oxyalkylen-Copolymere bereitzustellen, die in einem einfachen Verfahren unter Verwendung leicht zugänglicher Ausgangsstoffe hergestellt werden können, fungizid, selbstemulgierbar oder wasserlöslich sind und deren Hydrophilie, Emulgierbarkeit bzw.

Wasserlöslichkeit durch Modifikation der Polymerstrukturen und -kettenlängen gezielt gesteuert werden kann. Auf Wunsch sollen die erfindungsgemäßen Copolymeren reaktiv bzw. vernetzbar ausgestattet werden. Die Aufgabe wird durch die Erfindung gelöst.

Gegenstand der Erfindung sind Oxyalkylengruppen aufweisende Organosiliciumverbindungen mit Einheiten der Formel

$$A_aR_bSiX_cO_{\frac{4-(a+b+c)}{2}} \qquad (I),$$

wobei R gleich oder verschieden ist, einen einwertigen, halogenierten oder nicht halogenierten Kohlenwasserstoffrest mit vorzugsweise 1 bis 18 Kohlenstoffatom(en) je Rest bedeutet, X gleich oder verschieden ist, ein Chloratom oder ein Rest der Formel $-OR^1$ ist,
wobei $R^1$ einen Alkylrest mit vorzugsweise 1 bis 8 Kohlenstoffatom(en) je Rest, der durch ein Ethersauerstoffatom substituiert sein kann, bedeutet,
a 0 oder 1
b 0, 1, 2 oder 3,
c 0, 1, 2 oder 3 und die Summe $a+b+c \leq 4$ ist und
A ein Rest der Formel

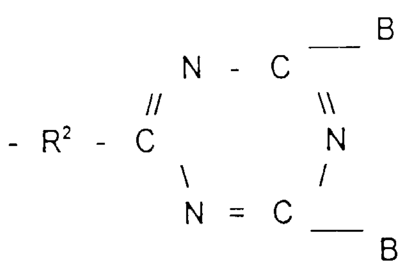

(II)

ist, wobei $R^2$ einen linearen oder verzweigten, substituierten oder nicht substituierten zweiwertigen Kohlenwasserstoffrest mit 1 bis 18 Kohlenstoffatom(en), der Ether-, Amin-, Sulfid-, Ester-, Amid-, Carbonat-, Harnstoff- und Urethangruppen enthalten oder nicht enthalten kann, darstellt, B gleich oder verschieden ist, X, $-NR_2^1$, $-O-C(O)-R^1$, $-SR^1$ oder ein Rest der Formel (III)

$$-NR^3R^2\,[\,O\text{-}CH(CH_3)\text{-}CH_2\,]_d\,[\,OCH_2CH_2\,]_e\,[\,O(CH_2)_4\,]_f\,OR^4$$

bedeutet, wobei X, $R^1$ und $R^2$ die oben dafür angegebene Bedeutung hat, $R^3$ gleich oder verschieden ist, ein Wasserstoffatom oder die Bedeutung von R hat, $R^4$ die Bedeutung von $R^3$ hat oder einen Rest der Formel

$$-C(=O)\text{-}R,\ -R^2NR_2^{\,3},\ -NR^3R^2\text{-},\ -R^2NR_2^{\,3}H^+X^-$$

darstellt, d, e und f eine ganze Zahl von vorzugsweise 0-200 ist, mit der Maßgabe, daß die Summe $d+e+f \geq 1$ ist und B pro Polymermolekül mindestens einen Rest der Formel (III) enthält. Die erfindungsgemäßen Organopolysiloxan-Oxyalkylen Copolymeren können über die Oxyalkylengruppen vernetzt sein.

Gegenstand der Erfindung ist weiterhin ein Verfahren zur Herstellung von Oxyalkylengruppen aufweisenden Organosiliciumverbindungen dadurch gekennzeichnet, daß Organosiliciumverbindungen mit Einheiten der Formel

$$E_aR_bSiX_cO_{\frac{4-(a+b+c)}{2}} \qquad (IV)$$

wobei R, X, a, b und c die oben dafür angegebene Bedeutung haben und E ein Rest der Formel

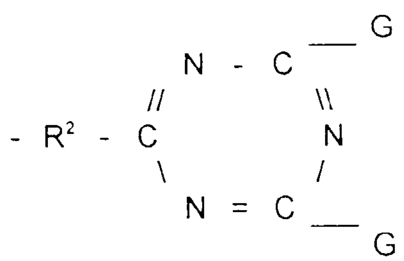

(V)

ist, wobei $R^2$ die oben dafür angegebene Bedeutung hat und G gleich oder verschieden sein kann und ein Chloratom, $-OR^1$, $-SR^1$, $-NR_2^{\,1}$ oder $-O\text{-}C(O)R^1$ bedeutet mit der Maßgabe, daß pro Polymermolekül mindestens ein Chloratom enthalten ist,

mit aminfunktionalisierten Polyoxyalkylen der Formel

$$HNR^3\text{-}R^2\,[\,OCH(CH_3)\text{-}CH_2\,]_d\,[\,O\text{-}CH_2\text{-}CH_2\,]_e\,[\,O(CH_2)_4\,]_f\,OR^5 \qquad (VI)$$

wobei $R^2$, $R^3$, d, e und f die oben dafür angegebene Bedeutung haben, $R^5$ die Bedeutung von $R^3$ hat oder einen Rest der Formel

$$-C(=O)\text{-}R,\ -R^2\,R_2^{\,3}\,N$$

darstellt, ohne oder in Gegenwart von Basen in organischen Lösungsmitteln, in Wasser oder in Mischungen aus beiden umgesetzt werden.

Die erfindungsgemäßen Organosiliciumverbindungen besitzen vorzugsweise ein durchschnittliches Molekulargewicht von 500 bis 1 000 000 g/mol, bevorzugt 5 000 bis 150 000 g/mol und vorzugsweise eine Viskosität von 10 bis 1 000 000 $mm^{2*}\,s^{-1}$ bei 25°C, bevorzugt 20 bis 100 000 $mm^2\,{*}s^{-1}$ bei 25°C.

Beispiele für Reste R sind vorzugsweise Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert. Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste,

wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Bevorzugt ist der Methylrest.

Beispiele für halogenierte Reste R sind vorzugsweise Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, mund p-Chlorphenylrest.

Beispiele für Alkylreste $R^1$ sind vorzugsweise Methyl-, Ethyl-, n-Propyl-, iso-Propyl-, 1-n-Butyl-, 2-n-Butyl-, iso-Butyl-, tert.-Butylreste. Bevorzugt sind der Methyl- und Ethylrest. Beispiele für Alkylreste $R^1$, die durch ein Ethersauerstoffatom substituiert sind, sind der vorzugsweise Methoxyethyl- und Ethoxyethylrest.

Beispiele für Reste $R^2$ sind vorzugsweise Alkylreste der Formel

$$-CH_2-CH_2-,\ -CH_2-CH_2-CH_2-,\ -CH_2-CH(CH_3)-,\ -CH_2-CH(CH_3)-CH_2-$$

und substituierte Alkylreste der Formel

$$-CH_2-CH_2-CH_2-O-,\ -(CH_2)_4-O-,\ -CH_2-CH(CH_3)-CH_2-O-,\ -(CH_2)_3-N(R^3)-,$$

$$-(CH_2)_3-N(R^3)-(CH_2)_2-N(R^3)-,\ -(CH_2)_3-S-,\ -(CH_2)_{10}-C(O)-O-,$$

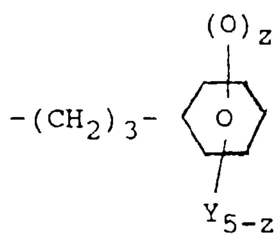
,

wobei $R^3$ die oben angegebene

Bedeutung hat, Y gleich oder verschieden ist, vorzugsweise ein Wasserstoffatom, einen linearen oder verzweigten Alkylrest mit vorzugsweise 1 bis 6 Kohlenstoffatom(en) je Rest, einen Rest der Formel $-OR^1$ enthalten kann oder -X bedeutet, wobei X und $R^1$ die oben dafür angegebene Bedeutung haben und z vorzugsweise eine ganze Zahl von 1-5 ist. Bevorzugt ist der Rest $R^3$ ein Wasserstoffatom, eine Methylgruppe oder eine Cyclohexylgruppe.

Bevorzugte Reste für $R^2$ sind solche der Formel

$$(CH_2)_3,\ -CH_2-CH(CH_3)-,\ (CH_2)_3-NH-,$$

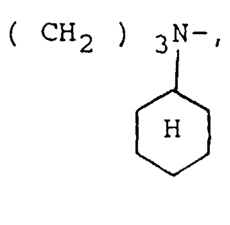

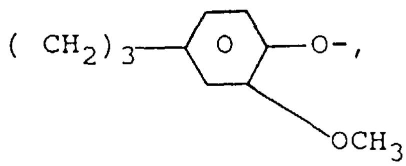 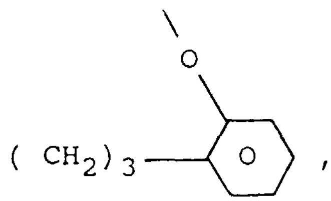

Bevorzugter Rest für B ist ein Chloratom oder Reste der Formel

$$-NH-CH(CH_3)-CH_2\ (OCH_2CH_2)_e\ OCH_2-CH(CH_3)-NH_3^+Cl^-$$

$$-NH-CH(CH_3)-CH_2\ (OCH(CH_3)-CH_2\ )_e\ OCH_2-CH(CH_3)-NH_3^+Cl^-$$

$$-NH-CH(CH_3)-CH_2-\ (OCH_2CH_2)_e\ OCH_2-CH(CH_3)-NH-$$

$$-NH-CH(CH_3)-CH_2-\ (OCH(CH_3)-CH_2)_e\ OCH_2-CH(CH_3)-NH-$$

$$-NH-CH(CH_3)-CH_2\ (OCHR_3CH_2)_e\ OCH_3$$

$$-NH\ (CH_2)_3\ (OCH_2CH_2)_e\ O-CH_3,$$

$$-NH\ (CH_2)_3\ (OCH(CH_3)-CH_2)_e\ OCH_3$$

wobei e vorzugsweise 2, 3, 12, 18 und 44 ist.

In Formel (I) und (IV) ist c bevorzugt 0.

In Formel (I) und (II) ist vorzugsweise

a durchschnittlich 0.001 bis 1.0, bevorzugt 0.01 bis 0.5,
b durchschnittlich 0.0 bis 3.0, bevorzugt 0.2 bis 2.5,
c durchschnittlich 0.0 bis 3.0 bevorzugt 0 bis 2 und vorzugsweise die Summe a+b+c durchschnittlich 0.1 bis 4.0 bevorzugt 0.2 bis 3.5 ist.

Bevorzugt als Oxyalkylengruppen aufweisende Organosiliciumverbindungen sind solche der Formel

$$A_gR_{3-g}SiO(SiR_2O)_n(SiRAO)_mSiR_{3-g}A_g \qquad (VII)$$

wobei A und R die oben dafür angegebene Bedeutung haben, g 0, 1 oder 2, n 0 oder eine ganze Zahl von 1 bis 1500, bevorzugt 5 bis 1000 und m 0 oder eine ganze Zahl von 1 bis 200, bevorzugt 1 bis 100 ist, mit der Maßgabe, daß mindestens ein Rest A je Molekül enthalten ist.

Vorzugsweise sind die bei den erfindungsgemäßen Verfahren eingesetzten Organosiliciumverbindungen Organopolysiloxane. Bevorzugt werden solche der Formel

$$E_gR_{3-g}SiO(SiR_2O)_n(SiRBO)_mSiR_{3-g}E_g \qquad (IVa)$$

wobei E, R, g, n und m die oben dafür angegebene Bedeutung haben, bei den erfindungsgemäßen Verfahren eingesetzt. Bevorzugte Reste für E sind solche der Formel

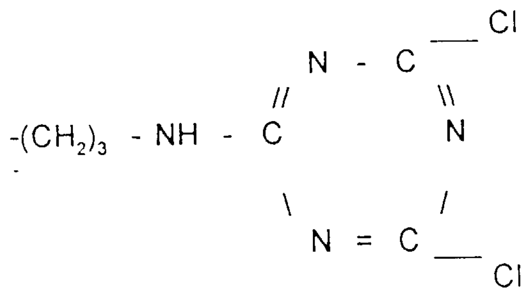

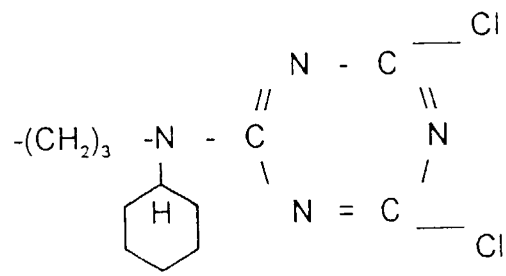

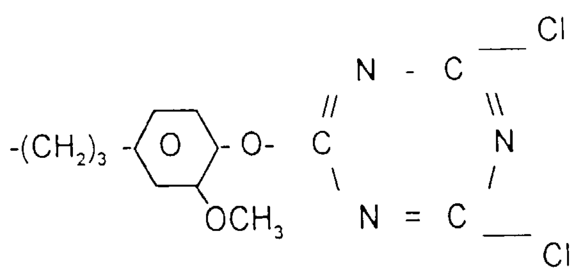

Beispiele für Basen, die bei dem erfindungsgemäßen Verfahren eingesetzt werden, sind vorzugsweise Amine, wie Triethylamin, Triisooctylamin, Pyridin, Diethylamin und Piperazin, und anorganische Basen, wie Kaliumhydroxid, Natriumhydroxid, Caesiumhydroxid, Calciumhydroxid, Natriumcarbonat, Natriumhydrogencarbonat und Natriummethylat.

Bei dem erfindungsgemäßen Verfahren werden pro Mol Chlorgruppe im Rest E der Organosiliciumverbindung (IV) vorzugsweise 0.01 - 6 Mol Amingruppe der Polyoxyalkylene der Formel (VI), bevorzugt 0.1 - 4 Mol Amingruppe und besonders bevorzugt 0.5 - 2 Mol Amingruppe verwendet. Die bei dem erfindungsgemäßen Verfahren entstehenden Aminhydrochloride bzw. Salze werden durch Filtration entfernt.

Die Basen werden vorzugsweise in solchen Mengen eingesetzt, daß 0 bis 2 Mol, bevorzugt 0 bis 1 Mol pro Mol Chlorgruppe im Rest E der Organosiliciumverbindung vorliegen.

Bei dem erfindungsgemäßen Verfahren können inerte, organische Lösungsmittel- verwendet werden. Beispiele für inerte organische Lösungsmittel sind Toluol, Xylol, THF, Butylacetat und Dimethoxyethan.

Bei dem erfindungsgemäßen Verfahren ist eine Umsetzung der Organosiliciumverbindungen der Formel (IV) mit Gruppen der Formel E mit aminfunktionalisierten Polyoxyalkylenen der Formel (VI) in Lösungsmittel bevorzugt, da in Wasser unter Eigenemulgierung der erfindungsgemäßen Copolymeren zwar eine applikationsreife Formulierung entsteht, die reaktiven Cyanurchloridgruppen jedoch schnell hydrolysieren.

Die erfindungsgemäßen Verfahren werden vorzugsweise beim Druck der umgebenden Atmosphäre, also etwa bei 1020 hPa (abs.) durchgeführt. Sie können aber auch bei höheren oder niedrigeren Drücken durchgeführt werden. Ferner werden die erfindungsgemäßen Verfahren vorzugsweise bei einer Temperatur von 25°C bis 150°C, bevorzugt 25°C bis 120°C, besonders bevorzugt 25°C bis 60°C, durchgeführt.

Die Darstellung des Zwischenprodukts der Organosiliciumverbindungen mit Triazingruppen (Gruppen der Formel

E) der Formel (IV), ist dadurch gekennzeichnet, daß Organosiliciumverbindungen mit Einheiten der Formel

$$D_aR_bX_cSiO_{(4-a-b-c)/2} \quad (VIII),$$

wobei D ein Rest der Formel

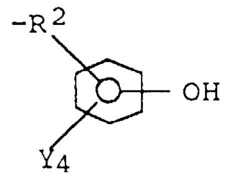

(IX)

ist und R, $R^2$, X, Y, a, b und c die angegebene Bedeutung haben, mit substituiertem oder unsubstituiertem Cyanurhalogenid, vorzugsweise Cyanurchlorid unter Verwendung von Basen polymeranalog umgesetzt werden.

Als Basen werden Amine, wie Triethylamin, Triisooctylamin, Pyridin, Diethylamin, Piperazin und anorganische Basen, wie Kaliumhydroxid, Natriumhydroxid, Caesiumhydroxid, Calciumhydroxid, Natriumcarbonat und Natriumhydrogencarbonat sowie Natriummethanolat verwendet.

Für die Darstellung der Vorstufe (VIII) und der bevorzugten Vorstufen mit Einheiten der Formel

$$D_dR_{3-d}SiO(SiR_2O)_e(SiRBO)_fSiR_{3-d}D_d \quad (X),$$

wobei D, R, d, e und f die oben angegebene Bedeutung haben, mit der Maßgabe, daß pro Polymermolekül mindestens ein Rest D enthalten ist,

durch eine Hydrosilylierungsreaktion werden Organosiliciumverbindungen mit mindestens einem Si-gebundenen Wasserstoffatom je Organopolysiloxan der Formel

$$H_iR_hX_jSiO_{(4-i-h)/2} \quad (XI),$$

worin R die oben angegebene Bedeutung hat,
i 0 oder 1, durchschnittlich 0.001 bis 1.0, bevorzugt 0.01 bis 0.5,
h 0, 1, 2 oder 3, durchschnittlich 0.0 bis 3.0, bevorzugt 0.2 bis 2.5, und die Summe i + h nicht größer als 3 ist,
j 0, 1, 2 oder 3, durchschnittlich 0.0 bis 3.0, bevorzugt 0.0-2.0, eingesetzt.

Die Vorstufen (VIII) und (X) sind bekannt, z.B. aus DE-OS 1 595 789 (offengelegt 12. Februar 1970, Krantz, General Electric Co.).

Die Organopolysiloxane mit mindestens einem Si-gebundenen Wasserstoffatom enthalten vorzugsweise mindestens 0.02 Gew.-%, bevorzugt 0.05 bis 1.65 Gew.-% Si-gebundenen Wasserstoff, und ihre durchschnittliche Viskosität beträgt vorzugsweise 5 bis 20000 $mm^2/s$ bei 25 °C, bevorzugt 10 bis 2 000 $mm^2/s$ bei 25 °C, besonders bevorzugt 10 bis 1000 $mm^2/s$ bei 25 °C.

Bevorzugt werden als Organopolysiloxane mit mindestens einem Si-gebundenen Wasserstoffatom je Molekül solche der Formel

$$H_kR_{3-k}SiO(SiR_2O)_l(SiRHO)_pSiR_{3-k}H_k \quad (XII),$$

wobei R die oben angegebene Bedeutung hat und k 0 oder 1,
l 0 oder eine ganze Zahl von 1 bis 1500, bevorzugt 5 bis 1000 und
p 0 oder eine ganze Zahl von 1 bis 200, bevorzugt 1 bis 100 ist, verwendet.

Verfahren zur Herstellung der Organopolysiloxane mit mindestens einem Si-gebundenen Wasserstoffatom je Molekül der Formel (XII), auch von solchen der bevorzugten Art, sind allgemein bekannt.

Vorzugsweise werden zur Herstellung der Formel VIII Hydroxyarylkomponenten der Formel verwendet

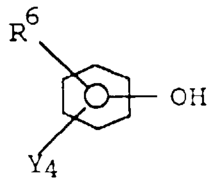

wobei $R^6$ einen linearen oder verzweigten, substituierten oder unsubstituierten Alkenylrest, mit vorzugsweise 1 bis 18, bevorzugt 1 bis 12 Kohlenwasserstoffatom(en) bedeutet, die aus DE-OS 1 595 789 bekannt sind.

Beispiele für $R^6$ sind $CH_2$=CH-, $CH_2$=$CHCH_2$-, $CH_2$=C($CH_3$)-, $CH_2$=C($CH_3$)$CH_2$-, $CH_2$=CH($CH_2$)$_9$- und substituierte Alkenylreste der Formel $CH_2$=$CHCH_2$O-, $CH_2$=$CHCH_2$OC(O)-, $CH_2$=$CHCH_2$NH-, $CH_2$=C($CH_3$)$CH_2$O-, $CH_2$=C($CH_3$)$CH_2$OC(O)-, $CH_2$=C($CH_3$)$CH_2$NH-, $CH_2$=$CHCH_2$S- und $CH_2$=$CHCH_2$NHC(O)-.

Eine bevorzugte Hydroxyarylkomponente (Xa) für die Herstellung der Vorstufe (VIII) durch eine Hydrosilylierungsreaktion ist beispielsweise unter der Bezeichnung Eugenol (4-Allyl-2-methoxyphenol) bei der Fa. Haarmann & Reimer käuflich erwerblich und weist im Vergleich zu ungesättigten Alkoholen, wie z.B. 3-Buten-1-ol, eine geringere Flüchtigkeit, einen höheren Flammpunkt, eine höhere Säurestärke und eine geringere Toxizität auf. Eugenol ist sogar für den Lebensmittelbereich zugelassen.

Ungesättigte Hydroxyarylverbindungen werden bei der Hydrosilylierungsreaktion vorzugsweise in solchen Mengen eingesetzt, daß 1 bis 2 Mol, bevorzugt 1.05 bis 1.50 Mol, organische Verbindung je Grammatom Si-gebundener Wasserstoff in der Organosiliciumverbindung (X) vorliegt.

Als die Anlagerung von Si-gebundenem Wasserstoff an aliphatische Mehrfachbindung fördernde Katalysatoren können auch bei dem Verfahren vorzugsweise die gleichen Katalysatoren eingesetzt werden, die auch bisher zur Förderung der Anlagerung von Si-gebundenem Wasserstoff an aliphatische Mehrfachbindungen eingesetzt werden konnten. Bei den Katalysatoren handelt es sich vorzugsweise um ein Metall aus der Gruppe der Platinmetalle oder um eine Verbindung oder um einen Komplex aus der Gruppe der Platinmetalle.

Beispiele für solche Katalysatoren sind vorzugsweise metallisches und feinverteiltes Platin, das sich auf Trägern wie Siliciumdioxid, Aluminiumoxid oder Aktivkohle befinden kann, Verbindungen oder Komplexe von Platin, wie Platinhalogenide, z. B. $PtCl_4$, $H_2PtCl_6$*6 $H_2O$, $Na_2PtCl_4$*4 $H_2O$, Platin-Olefin-Komplexe, Platin-Alkohol-Komplexe, Platin-Alkoholat-Komplexe, Platin-E-ther-Komplexe, Platin-Aldehyd-Komplexe, Platin-Keton-Komplexe, einschließlich Umsetzungsprodukten aus $H_2PtCl_6$*6$H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(γ-picolin)-platindichlorid, Trimethylendipyridinplatindichlorid, Dicyclopentadienplatindichlorid, Dimethylsulfoxidethylenplatin-(II)-dichlorid, Cyclooctadien-Platindichlorid, Norbornadien-Platindichlorid, γ-Picolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 42 92 434, wie das Umsetzungsprodukt aus in 1-Octen gelöstem Platintetrachlorid mit sec. [Rh(Cl){p($C_6H_5$)}$_3$]-Butylamin, oder Ammonium-Platinkomplexe gemäß EP-B 1 10 370, bevorzugt sind Hexachloroplatinsäure, Platin-Olefinkomplex, Platin-Vinylsiloxankomplex und der Platin-1,3-Divinyl-1,1,3,3-tetramethyldisiloxankomplex.

Der Katalysator wird vorzugsweise in Mengen von 2 bis 200 Gew.-ppm (Gewichtsteilen je Million Gewichtsteilen), bevorzugt in Mengen von 5 bis 50 Gew.-ppm, jeweils berechnet als elementares Platin und bezogen auf das Gesamtgewicht von organischer Verbindung und Organosiliciumverbindung eingesetzt.

Das Verfahren wird vorzugsweise beim Druck der umgebenden Atmosphäre, also bei etwa 1020 hPa (abs.) durchgeführt, es kann aber auch bei höheren oder niedrigeren Drücken durchgeführt werden. Ferner wird das erfindungsgemäße Verfahren vorzugsweise bei einer Temperatur von 30 °C bis 150 °C, bevorzugt 50 °C bis 120 °C, durchgeführt.

Bei dem Verfahren können vorzugsweise inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Isophoron, Octanisomere, Butylacetat, Isopropanol und Dimethoxyethan.

Von den nach dem Verfahren hergestellten Hydroxyarylgruppen enthaltenden Organosiliciumverbindungen wird vorzugsweise überschüssige organische Verbindung sowie gegebenenfalls mitverwendtes inertes, organisches Lösungsmittel destillativ entfernt.

Bei dem Verfahren wird substituiertes oder unsubstituiertes Cyanurhalogenid der Formel

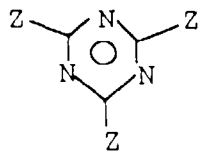

(XIII)

mit den beschriebenen Vorstufen der Formel (VIII) oder den bevorzugten Vorstufen der Formel (X) unter Basenzusatz verestert, wobei Z ein Chlorrest oder Methoxyrest ist.

Bei dem Verfahren werden pro Mol Hydroxygruppe vorzugsweise 0.5 bis 6 Mol substituiertes oder unsubstituiertes Cyanurhalogenid der Formel (XIII), bevorzugt 0.5 bis 3 Mol substituiertes oder unsubstituiertes Cyanurchlorid und besonders bevorzugt 1 bis 2 Mol substituiertes oder unsubstituiertes Cyanurchlorid verwendet. Die gegebenenfalls bei dem erfindungsgemäßen Verfahren entstehenden Aminhydrochloride bzw. Salze werden durch Filtration entfernt, wobei bei der Filtration sauere, basische oder neutrale Filtrierhilfen verwendet werden können.

Das Verfahren wird vorzugsweise beim Druck der umgebenden Atmosphäre, also bei etwa 1020 hPa (abs.) durchgeführt, es kann aber auch bei höheren oder niedrigeren Drücken durchgeführt werden. Ferner wird das erfindungsgemäße Verfahren vorzugsweise bei einer Temperatur von - 20 °C bis 120 °C, bevorzugt -10 °C bis 100 °C, durchgeführt.

Bei dem Verfahren können vorzugsweise inerte, organische Lösungsmittel mitverwendet werden, wobei die Mitverwendung von polaren organischen Lösungsmitteln bevorzugt ist. Beispiele für inerte, organische Lösungsmittel sind Toluol, Xylol, Isophoron, Octanisomere, Butylacetat, Isopropanol, Dimethylethylenglykol, Tehtrahydrofuran und Dioxan.

Die nach dem Verfahren erhaltenen Triazingruppen aufweisenden Organosiliciumverbindungen können auch nicht veresterte Hydroxyarylgruppen enthalten.

Weiterhin können bei dem Verfahren nicht veresterte Hydroxygruppen der Organosiliciumverbindungen (VIII) oder (X) vorzugsweise durch Carboxylierungsmittel wie Essigsäureanhydrid, Diketen und Dihydropyran weiter umgesetzt werden.

Von den nach dem Verfahren hergestellten Triazingruppen aufweisenden Organosiliciumverbindungen wird vorzugsweise überschüssige organische Verbindung (XIII) sublimativ oder durch Filtration, und überschüssiges Carboxylierungsmittel sowie gegebenenfalls mitverwendetes inertes, organisches Lösungsmittel destillativ entfernt. Womit die Beschreibung des Verfahrens zur Herstellung des Zwischenproduktes abgeschlossen wäre.

Die nach dem erfindungsgemäßen Verfahren erhaltenen Polyoxyalkylen aufweisenden Organopolysiloxane können mit Organopolysiloxanen ausgewählt aus der Gruppe bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

Vorzugsweise werden als lineare, endständige Triorganosiloxygruppen aufweisende Organopolysiloxane solche der Formel

$$R_3SiO(SiR_2O)_rSiR_3$$

wobei R die oben dafür angegebene Bedeutung hat und r vorzugsweise 0 oder eine ganze Zahl im Wert von 1 bis 1500, bevorzugt 10 bis 1000 ist, als lineare, endständige Hydroxylgruppen aufweisende Organopolysiloxane solche der Formel

$$HO(SiR_2O)_sH$$

wobei R die oben dafür angegebene Bedeutung hat und s vorzugsweise eine ganze Zahl im Wert von 1 bis 1500, bevorzugt 10 bis 1000 ist, als cyclische Organopolysiloxane solche der Formel

$$(R_2SiO)_t$$

wobei R die oben dafür angegebene Bedeutung hat und t vorzugsweise eine ganze Zahl von 3 bis 12, bevorzugt 3 bis 5 ist, und als Mischpolymerisate solche aus Einheiten der Formel

$R_2SiO$

und

$RSiO_{3/2}$

wobei R die oben dafür angegebene Bedeutung hat, eingesetzt.

Die Mengenverhältnisse der bei der gegebenenfalls durchgeführten Equilibrierung eingesetzten Organopolysiloxane und Oxyalkylengruppen aufweisenden Organopolysiloxane werden lediglich durch den gewünschten Anteil der Oxyalkylengruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise sauere Katalysatoren, welche die Equilibrierung fördern, eingesetzt. Beispiele für solche Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (= Teile je Million), insbesondere 50 bis 200 Gew.-ppm, jeweils bezogen auf das Gesamtgewicht der eingesetzten Organosiliciumverbindungen, verwendet. Die Verwendung basischer Equilibrierungskatalysatoren ist zwar möglich, jedoch nicht bevorzugt.

Die gegebenenfalls durchgeführte Equilibrierung wird vorzugsweise bei 80°C bis 150°C, bevorzugt 120°C und beim Druck der umgebenden Atmosphäre, also etwa bei 1020 hPa (abs.), durchgeführt. Falls erwünscht, können aber auch höhere oder niedrigere Drücke angewendet werden. Das Equilibrieren wird vorzugsweise in 5 bis 20 Gew.-%, bevorzugt 10 bis 20 Gew.-%, bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des bei dem Equilibrieren erhaltenen Gemisches kann der Katalysator unwirksam gemacht werden.

Die erfindungsgemäßen Verfahren können absatzweise, halbkontinuierlich oder vollkontinuierlich durchgeführt werden.

Die erfindungsgemäßen Polyoxyalkylengruppen aufweisenden Organosiliciumverbindungen zeichnen sich durch ihre einfache Darstellungsweise und die Möglichkeit der gezielten Abstufung der Hydrophilie aus. Neben einer möglichen Permanenzausrüstung besitzen die erfindungsgemäßen Copolymeren einen guten hydrophilen permanenten Weichgriff bei gleichzeitig guter Aufsaugfähigkeit von Wasser und eine geringe Vergilbungsneigung, wobei permanent in diesem Zusammenhang heißt, daß die mit den erfindungsgemäßen Substanzen erzielten Eigenschaften auch nach mehrmaligem Waschen erhalten bleiben.

Die genannten erfindungsgemäßen Copolymeren dienen der Behandlung von textilen Flächengebilden, wie z.B. Geweben, Maschenwaren oder Vlies. Die Permanenz der Effekte gegenüber Waschprozessen ist insbesondere im Fall von Textilien ausgezeichnet, welche Cellulosefasern oder Polyamidfasern enthalten oder aus ihnen bestehen. Die Erfindung betrifft ferner Textilfaserpräparationen und Lederbehandlung.

<u>Beispiel 1:</u>

20.0 g eines cyanurchloridhaltigen Siliconöles der Form
$M-D_{100}-M$ mit $D = Si(CH_3)_2O$ und
$M = Si(CH_2)_3-C_6H_3(m-OMe)-p-O-C_3N_3Cl_2$ und einem Chlorgehalt von 1.7 Gew.-%, das in Beispiel 14 beschrieben ist, werden in 40 g (0.43 mol) Toluol unter Rühren bei Raumtemperatur vorgelegt. Dazu tropft man langsam eine Mischung aus 5.68 g (9.6 mmol) O-(2-Aminopropyl)-O'-(methoxyethyl)polypropylenglykol einer mittleren Kettenlänge von 8.1 Wiederholungseinheiten (Aminzahl = 1.69 mol/g) und 2.13 g einer 25 Gew-%igen Lösung von Kaliumhydroxid in Methanol (9.5 mmol KOH).

Die Reaktionslösung wird dann noch 30 Minuten bei 80 °C gerührt, filtriert und im Hochvakuum bis zur Gewichtskonstanz eingeengt. Nach erneuter Filtration erhält man 23.37 g (91 % d. Th.) eines klaren, gelben Öles der Viskosität 603 $mm^2/s$ mit einem Chlorgehalt von < 0.05 Gew.-%.

<u>Beispiel 2:</u>

20.0 g eines-cyanurchloridhaltigen Siliconöles der Form
$M-D_{100}-M$ mit $D = Si(CH_3)_2O$ und

$M = Si(CH_2)_3C_6H_3$(m-OMe)-p-O-$C_3N_3Cl_2$ und einem Chlorgehalt von 1.7 Gew.-% werden in 40 g (0.43 mol) Toluol unter Rühren bei Raumtemperatur vorgelegt.

Dazu tropft man langsam eine Mischung aus 2.84 g (4.8 mmol) O-(2-Aminopropyl)-O'-(methoxyethyl)polypropylenglykol einer mittleren Kettenlänge von 8.1 Wiederholungseinheiten (Aminzahl = 1,69 mmol/g) und 1.07 g einer 25 Gew.-%igen Lösung von Kaliumhydroxid in Methanol (4.75 mmol KOH).

Die Reaktionslösung wird dann noch 30 Minuten bei 80 °C gerührt, filtriert und im Hochvakuum bis zur Gewichtskonstanz eingeengt. Nach erneuter Filtration erhält man 21.73 g (95.1 % d. Th.) eines klaren, gelben Öles der Viskosität 4300 $mm^2/s$ mit einem Chlorgehalt von 0.22 Gew.-%.

Beispiel 3:

20 g eines cyanurchloridhaltigen Cyclohexylaminsiliconöls der Form $MD_xD_yM$ mit $M = O_{1/2}Si(CH_3)_3$, $D_x = Si(CH_3)_2O$ und $D_y = Si(CH_2)_3N(C_6H_{11})C_3N_3Cl_2$ und einem Chlorgehalt von 2.9 Gew.-%, das in Beispiel 16 beschrieben ist, werden in 40 g (0.43 mol) Toluol unter Rühren bei Raumtemperatur vorgelegt.

Dazu tropft man langsam eine Mischung aus 9.68 g (16,4 mmol) O-(2-Aminopropyl)-O'-(methoxyethyl)polypropylenglykol einer mittleren Kettenlänge von 8.1 Wiederholungseinheiten (Aminzahl = 1.69 mmol/g) und 3.64 g einer 25 Gew.-prozentigen Lösung von Kaliumhydroxid in Methanol (16.2 mmol KOH).

Die Reaktionslösung wird dann 30 Minuten bei 80 °C gerührt, filtriert und im Hochvakuum bis zur Gewichtskonstanz eingeengt. Nach erneuter Filtration erhält man 25.39 g (85.6 % d. Th.) eines transluzenten, farblosen Öles der Viskosität 1050 $mm^2/s$ mit einem Chlorgehalt von 1.0 Gew.-%.

Beispiel 4:

20 g eines cyanurchloridhaltigen Cyclohexylaminsiliconöles der in Beispiel 3 beschriebenen Struktur und einem Chlorgehalt von 2.9 Gew.-% werden in 40 g (0.43 mol) Toluol unter Rühren bei Raumtemperatur vorgelegt.

Dazu tropft man langsam eine Mischung aus 4.84 g (8.2 mmol) O-(2-Aminopropyl)-O'-(methoxyethyl)polypropylenglykol einer mittleren Kettenlänge von 8.1 Wiederholungseinheiten (Aminzahl = 1.69 mmol/g) und 1.8 g einer 25 Gew.-%igen Lösung von Kaliumhydroxid in Methanol (8.0 mmol KOH).

Die Reaktionslösung wird dann 30 Minuten bei 80 °C gerührt, filtriert und im Hochvakuum bis zur Gewichtskonstanz eingeengt. Nach erneuter Filtration erhält man 22.84 g (91.9 % d. Th.) eines leicht trüben, farblosen Öles der Viskosität 590 $mm^2/s$ mit einem Chlorgehalt von 0.24 Gew.-%.

Beispiel 5:

20 g eines cyanurchloridhaltigen Siliconöles der Form $MD_xD_yM$ mit $M = O_{1/2}Si(CH_3)_3$, $D_x = Si(CH_3)_2O$ und $D_y = Si(CH_2)_3C_6H_3$(mOMe)-p-$OC_3N_3Cl_2$ und einem Chlorgehalt von 1.1 Gew.-%, werden in 40 g (0.43 mol) Toluol unter Rühren bei Raumtemperatur vorgelegt.

Dazu tropft man langsam eine Mischung aus 3.67 g (6.2 mmol)O-(2-Aminopropyl)-O'-(methoxyethyl)polypropylenglykol einer mittleren Kettenlänge von 8.1 Wiederholungseinheiten (Aminzahl = 1.69 mmol/g) und 1.38 g einer 25 Gew.-%igen Lösung von Kaliumhydroxid in Methanol (6.1 mmol KOH).

Die Reaktionslösung wird dann noch 30 Minuten bei 80 °C gerührt, filtriert und im Hochvakuum bis zur Gewichtskonstanz eingeengt. Nach erneuter Filtration erhält man 20.59 g (87 % d. Th.) eines leicht trüben, gelben Öles der Viskosität 4850 $mm^2/s$ mit einem Chlorgehalt von 0,53 Gew.-%.

Beispiel 6:

Die Arbeitsweise von Beispiel 5 wurde wiederholt, nur daß statt 3.67 g, 1.84 g des O-(2-Aminopropyl)-O'-(methoxyethyl)polypropylenglykols und statt 1.38 g, 0.69 g der 25 Gew-%igen Lösung von Kaliumhydroxid in Methanol verwendet wurde. Man erhält 21.24 g (97.3 % d. Th.) eines klaren, gelben Öles der Viskosität 820 $mm^2/s$ mit einem Chlorgehalt von 0.8 Gew.-%.

Beispiel 7:

20 g eines cyanurchloridhaltigen Siliconöles der in Beispiel 1 beschriebenen Form, und 0.4 g (4,75 mmol) Natriumhydrogencarbonat werden in 40 g (0.43 mol) Toluol unter Rühren bei Raumtemperatur vorgelegt. Dazu tropft man langsam 3.02 g (4.8 mmol) O-(2-Aminopropyl)-O'-(methoxyethyl)polyethylenglykol einer mittleren Kettenlänge von 13 Wiederholungseinheiten (Aminzahl = 1.59 mmol/g). Die Reaktionsmischung wird dann noch 30 Minuten bei 80°C gerührt, filtriert und im Hochvakuum bis zur Gewichtskonstanz eingeengt. Man erhält 21.67 g (94.1% d. Th.) eines klaren,

gelben Öles der Viskosität 24 800 $mm^2/s$ mit einem Chlorgehalt von 0.68 Gew.-%.

Beispiel 8:

7.0 g (5.25 mmol) O,O'-Bis(-2-aminopropyl)polyethylenglykol einer mittleren Kettenlänge von 45 Wiederholungseinheiten (Aminzahl = 0.75 mmol/g) werden bei Raumtemperatur in 37.4 g (2.08 mol) destilliertem Wasser gelöst.

Die wäßrige Flotte wird anschließend mit einem Dispergator der Fa. Turrax (13000 UpM) geschert. Dazu werden langsam 5.47 g eines cyanurchloridhaltigen Siliconöles, der in Beispiel 1 beschriebenen Form, dosiert.

Anschließend-wird mit einem Magnetrührer noch eine Stunde gerührt. Man erhält eine stabile Emulsion mit einem Feststoffgehalt von 25 Gew.-%.

Beispiel 9:

8.0 g (17.3 mmol) O,O'-Bis(-2-aminopropyl)polyethylenglykol einer mittleren Kettenlänge von 18 Wiederholungseinheiten (Aminzahl = 2.16 mmol/g) werden bei Raumtemperatur in 42.02 g (2.33 mol) destilliertem Wasser gelöst.

Die wäßrige Flotte wird anschließend mit einem Dispergator der Fa. Turrax (13000 UpM) geschert. Dazu werden langsam 6.01 g eines cyanurchloridhaltigen Siliconöles, der in Beispiel 1 beschriebenen Form, dosiert.

Anschließend wird mit einem Magnetrührer noch eine Stunde gerührt. Man erhält eine stabile Emulsion mit einem Feststoffgehalt von 25 Gew.-%.

Beispiel 10:

Die Arbeitsweise von Beispiel 8 wurde wiederholt, nur daß statt 7.0 g, 7.5 g 0,0'-Bis-(-2-aminopropyl)polyethylenglykol einer mittleren Kettenlänge von 45 Wiederholungseinheiten, statt 37.4 g 29.18 g destilliertes Wasser und statt 5.47 g des in Beispiel 1 beschriebenen cyanurchloridhaltigen Siliconöles 2.23 g des in Beispiel 3 beschriebenen cyanurchloridhaltigen Siliconöles verwendet wurde. Man erhält eine Emulsion, die nach 3 Tagen leicht aufrahmt und einen Feststoffgehalt von 25 Gew.-% hat.

Beispiel 11:

Die Arbeitsweise von Beispiel 8 wurde wiederholt, nur daß statt 37.4, 46.4 g destilliertes Wasser und statt 5.47 g des in Beispiel 1 beschriebenen cyanurchloridhaltigen Siliconöles, 8.46 g des in Beispiel 5 beschriebenen cyanurchloridhaltigen Siliconöles verwendet wurde. Man erhält eine stabile Emulsion mit einem Feststoffgehalt von 25 Gew.-%.

Beispiel 12:

4.0 g (8.64 mmol) O,O'-Bis(-2-aminopropyl)polyethylenglykol einer mittleren Kettenlänge von 18 Wiederholungseinheiten (Aminzahl = 2.16 mmol/g) werden bei Raumtemperatur in 53.76 g (2.98 mol) destilliertem Wasser gelöst.

Die wäßrige Flotte wird anschließend mit einem Dispergator der Fa. Turrax (13000 UpM) geschert. Dazu werden langsam 13.92 g eines in Beispiel 5 beschriebenen cyanurchloridhaltigen Siliconöles getropft. Anschließend wird mit einem Magnetrührer noch eine Stunde gerührt. Man erhält eine stabile Emulsion mit einem Feststoffgehalt von 25 Gew.-%.

Beispiel 13:

Ein Gemisch aus 108.4 g (0.660 mol) Eugenol, 2000 g (0.600 mol SiH) eines $\alpha,\omega$-Hydrogen-Polydimethylsiloxans der Viskosität 170 $mm^2/s$ und 7.026 ml (10 ppm Platin) einer 1 %igen Lösung von Hexachloroplatinsäure in Isopropanol wurde unter Stickstoffinertisierung auf 30 °C aufgeheizt. Nach erfolgter exothermer Reaktion wurde das Reaktionsgemisch 2 Stunden lang bei einer Temperatur von 50 °C gerührt. Danach wurden flüchtige Bestandteile bei 120°C und einem Vakuum von ca. 5 mbar entfernt. Nach Abkühlung und anschließender Filtration erhielt man ein bräunliches, klares öl mit einer Viskosität von 200 $mm^2/s$ und einer Hydroxylzahl von 17.06 mg KOH/g. Ausbeute: 93.0 % (der Theorie) (Vorstufe II)

Beispiel 14:

Unter Stickstoffdurchfluß wurde eine Mischung aus 1000 g (0.304 mol Hydroxygruppen) Vorstufe II, 52.0 g einer 30 %igen Lösung von $NaOCH_3$ in MeOH (0.289 mol $NaOCH_3$) und 105.2 g Dimethoxyethan 1 Stunde lang bei einer Temperatur von 25 °C, und anschließend 1 Stunde lang bei einer Temperatur von 60 °C gerührt. Dabei würde der

Großteil des Methanols im Gemisch mit Dimethoxyethan destillativ entfernt. Nach erneuter Zugabe von 105.2 g Dimethoxyethan wurde diese Mischung im Verlauf von 1.5 Stunden zu einer Lösung von 56.1 g (0.304 mol) Cyanurchlorid in 224.4 g Dimethoxyethan zudosiert. Anschließend wurde das Reaktionsgemisch 1 Stunde lang bei einer Temperatur von 60 °C und dann unter Abkühlung 2 Stunden gerührt. Danach wurden alle flüchtigen Bestandteile bei einer Temperatur von 140 °C und einem Vakuum von ca. 5 mbar entfernt. Nach abschließender Filtration erhielt man ein schwach grünliches, leicht trübes Öl mit einer Viskosität von 271 $mm^2/s$. Ausbeute: 79.8 % (der Theorie)

Beispiel 15:

Eine Lösung von 346.9 g (2.113 mol) Eugenol in 409.9 g Isopropanol wurde mit 8.25 g (0.078 mol) Natriumcarbonat versetzt und Temperatur wurden 13.013 ml (10 ppm Platin) einer 1 %igen Lösung von Hexachloroplatinsäure in Isopropanol zugegeben. Anschließend wurden im Verlauf von 65 Minuten 3750 g (1.838 mol SiH) eines Polydimethylsiloxans der Viskosität 69 $mm^2/s$ mit seitenständigen Hydrogengruppen zudosiert und das Reaktionsgemisch 1 Stunde lang bei einer Temperatur von 90°C gerührt. Danach wurden flüchtige Bestandteile bei 120°C und einem Vakuum von ca. 5 mbar entfernt. Nach Filtration und anschließender Kurzwegdestillation erhielt man ein bräunliches, klares Öl mit einer Viskosität von 309 $mm^2/s$ und einer Hydroxylzahl von 20.55 mg KOH/g. Ausbeute: 79.7 % (der Theorie) (Vorstufe III)

Beispiel 16:

Unter Stickstoffdurchfluß wurde eine Mischung aus 250 g (0.092 mol Hydroxygruppen) Vorstufe III, 15.6 g einer 30 %igen Lösung von $NaOCH_3$ in MeOH (0.087 mol $NaOCH_3$) und 26.6 g Dimethoxyethan 1 Stunde lang bei einer Temperatur von 25 °C, und anschließend 1 Stunde lang bei einer Temperatur von 60 °C gerührt. Dabei wurde der Großteil des Methanols im Gemisch mit Dimethoxyethan destillativ entfernt. Nach erneuter Zugabe von 26.6 g Dimethoxyethan wurde diese Mischung im Verlauf von 0.4 Stunden zu einer Lösung-von 16.9 g (0.092 mol) Cyanurchlorid in 67.7 g Dimethoxyethan zudosiert. Anschließend wurde das Reaktionsgemisch 1 Stunde lang bei einer Temperatur von 60 °C und dann unter Abkühlung 2 Stunden gerührt. Danach wurden alle flüchtigen Bestandteile bei einer Temperatur von 140 °C und einem Vakuum von ca. 5 mbar entfernt. Nach abschließender Filtration erhielt man ein schwach grünliches, klares Öl mit einer Viskosität von 278 $mm^2/s$. Ausbeute: 85.8 % (der Theorie).

**Patentansprüche**

**1.** Oxyalkylengruppen aufweisende Organosiliciumverbindungen mit Einheiten der Formel

$$A_aR_bSiX_cO_{\frac{4-(a+b+c)}{2}} \quad (I),$$

wobei R gleich oder verschieden ist, einen einwertigen, halogenierten oder nicht halogenierten Kohlenwasserstoffrest bedeutet, X gleich oder verschieden ist, ein Chloratom oder ein Rest der Formel $-OR^1$ ist, wobei $R^1$ einen Alkylrest, der durch ein Ethersauerstoffatom substituiert sein kann, bedeutet,
a 0 oder 1
b 0, 1, 2 oder 3,
c 0, 1, 2 oder 3 und die Summe a+b+c ≤ 4 ist und
A ein Rest der Formel

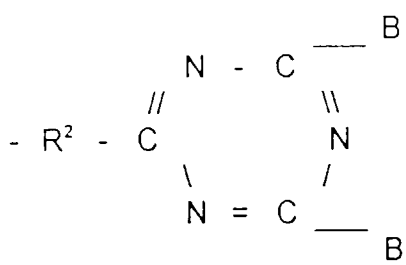

(II)

ist, wobei $R^2$ einen linearen oder verzweigten, substituierten oder nicht substituierten zweiwertigen Kohlenwasserstoffrest, der Ether-, Amin-, Sulfid-, Ester-, Amid-, Carbonat-, Harnstoff- und Urethangruppen enthalten oder nicht enthalten kann, darstellt,
B gleich oder verschieden ist, X, $-NR_2^1$, $-O-C(=O)-R^1$, $-SR^1$ oder ein Rest der Formel

$$-NR^3R^2\,[O-CH(CH_3)-CH_2]_d\,[OCH_2CH_2]_e\,[O(CH_2)_4]_f\,OR^4 \qquad (III)$$

bedeutet, wobei X, $R^1$ und $R^2$ die oben dafür angegebene Bedeutung hat, $R^3$ gleich oder verschieden ist, ein Wasserstoffatom oder die Bedeutung von R hat, $R^4$ die Bedeutung von $R^3$ hat oder einen Rest der Formel

$$-C(=O)-R,\ -R^2\,NR_2^{\,3}\,,\ -NR^3R^2\,-,\ -R^2NR_2^{\,3}\,H^+X^-$$

darstellt, d, e und f eine ganze Zahl von 0-200 ist, mit der Maßgabe, daß die Summe d+e+f ≥ 1 ist und B pro Polymermolekül mindestens einen Rest der Formel (III) enthält.

2. Oxyalkylengruppen aufweisende Organosiliciumverbindungen nach Anspruch 1, dadurch gekennzeichnet, daß B ein Chloratom oder Reste der Formel

$$-NH-CH(CH_3)-CH_2\,(OCH_2CH_2)_e\,OCH_2-CH(CH_3)-NH_3^+Cl^-$$

$$-NH-CH(CH_3)-CH_2\,(OCH(CH_3)-CH_2)_e\,OCH_2-CH(CH_3)-NH_3^+Cl^-$$

$$-NH-CH(CH_3)-CH_2-\,(OCH_2CH_2)_e\,OCH_2-CH(CH_3)-NH-$$

$$-NH-CH(CH_3)-CH_2-\,(OCH(CH_3)-CH_2)_e\,OCH_2-CH(CH_3)-NH-$$

$$-NH-CH(CH_3)-CH_2\,(OCHR_3CH_2)_e\,OCH_3$$

$$-NH\,(CH_2)_3\,(OCH_2CH_2)_e\,O-CH_3,$$

$$-NH\,(CH_2)_3\,(OCH(CH_3)-CH_2)_e\,OCH_3$$

wobei e 2, 3, 12, 18 und 44 sein kann, sind.

3. Oxyalkylengruppen aufweisende Organosiliciumverbindungen nach Anspruch 1, dadurch gekennzeichnet, daß es sich um solche der Formel

$$A_gR_{3-g}SiO(SiR_2O)_n(SiRAO)_mSiR_{3-g}A_g \qquad (VII)$$

handelt,
wobei A und R die oben dafür angegebene Bedeutung haben, g 0, 1 oder 2, n 0 oder eine ganze Zahl von 1 bis 1500 und m 0 oder eine ganze Zahl von 1 bis 200 ist, mit der Maßgabe, daß mindestens ein Rest A je Molekül enthalten ist.

4. Verfahren zur Herstellung der Oxyalkylengruppen aufweisenden Organosiliciumverbindungen nach Anspruch 1 bis 3, dadurch gekennzeichnet, daß Organosiliciumverbindungen mit Einheiten der Formel

$$E_aR_bSiX_cO_{\frac{4-(a+b+c)}{2}} \quad (IV)$$

wobei R, X, a, b und c die oben dafür angegebene Bedeutung haben und E ein Rest der Formel

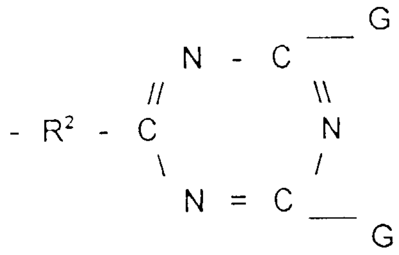

(V)

ist, wobei $R^2$ die oben dafür angegebene Bedeutung hat und G ein Chloratom, $-OR^1$, $-SR^1$, $-NR_2{}^1$ oder $-O-C(O)R^1$ bedeutet mit der Maßgabe, daß pro Polymermolekül mindestens ein Chloratom enthalten ist,

mit aminfunktionalisierten Polyoxyalkylen der Formel

$$HNR^3-R^2\,[OCH(CH_3)-CH_2]_d\,[O-CH_2-CH_2]_e\,[O(CH_2)_4]_f\,OR^5 \quad (VI)$$

wobei $R^2$, $R^3$, d, e und f die oben dafür angegebene Bedeutung haben, $R^5$ die Bedeutung von $R^3$ hat oder einen Rest der Formel

$$-C(=O)-R,\ -R^2R_2{}^3N$$

darstellt, ohne oder in Gegenwart von Basen in organischen Lösungsmitteln, in Wasser oder in Mischungen aus beiden umgesetzt werden.

**5.** Verfahren zur Herstellung der Oxyalkylengruppen aufweisenden Organosiliciumverbindungen nach Anspruch 4, dadurch gekennzeichnet, daß es sich bei den Organosiliciumverbindungen IV um Organopolysiloxane der Formel

$$E_gR_{3-g}SiO(SiR_2O)_n(SiRBO)_mSiR_{3-g}E_g \quad (IVa)$$

handelt,
wobei E, R, g, n und m die oben dafür angegebene Bedeutung haben.

**6.** Verfahren zur Herstellung der Oxyalkylengruppen aufweisenden Organosiliciumverbindungen nach den Ansprüchen 4 oder 5, dadurch gekennzeichnet, daß es sich bei E um solche der Formeln

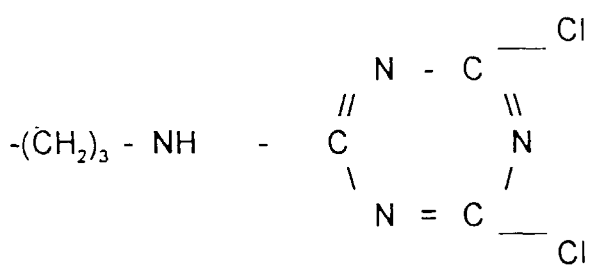

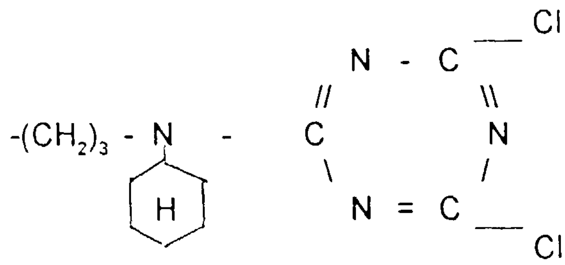

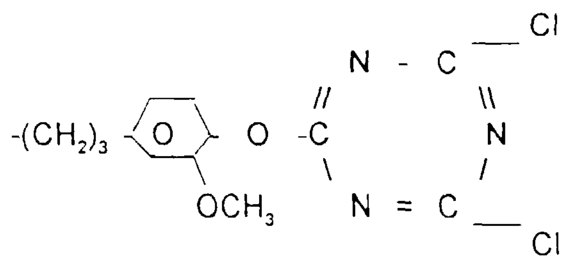

handelt.

7. Equilibrierung der Oxyalkylengruppen aufweisenden Organosiliciumverbindungen nach einem oder mehreren der Ansprüche 1 bis 3 oder hergestellt nach einem oder mehreren der Ansprüche 4 bis 6, dadurch gekennzeichnet, daß die Oxyalkylengruppen aufweisenden Organosiliciumverbindungen mit Organopolysiloxanen ausgewählt aus der Gruppe bestehend aus linearen, endständigen Triorganosiloxygruppen aufweisenden Organopolysiloxanen, linearen, endständigen Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

8. Equilibrierung der Oxyalkylengruppen aufweisenden Organosiliciumverbindungen nach Anspruch 7, dadurch gekennzeichnet, daß als lineare, endständige Triorganosiloxygruppen aufweisende Organopolysiloxane solche der Formel

$$R_3SiO(SiR_2O)_rSiR_3,$$

wobei R die oben dafür angegebene Bedeutung hat und r 0 oder eine ganze Zahl im Wert von 1 bis 1500 ist, als lineare, endständige Hydroxylgruppen aufweisende Organopolysiloxane solche der Formel

$$HO(SiR_2O)_sH,$$

wobei R die oben dafür angegebene Bedeutung hat und s eine ganze Zahl im Wert von 1 bis 1500 ist, als cyclische Organopolysiloxane solche der Formel

$$(R_2SiO)_t,$$

wobei R die oben dafür angegebene Bedeutung hat und t eine ganze Zahl von 3 bis 12 ist, und als Mischpolymerisate solche aus Einheiten der Formel

$$R_2SiO$$

und

$$RSiO_{3/2},$$

wobei R die oben dafür angegebene Bedeutung hat, eingesetzt werden.

**9.** Verfahren zur Behandlung von textilen Geweben, Textilfaserpräperationen und Lederbehandlung, dadurch gekennzeichnet, daß Oxyalkylengruppen aufweisenden Organosiliciumverbindungen nach einem oder mehreren der Ansprüche 1 bis 3 oder hergestellt nach einem oder mehreren der Ansprüche 4 bis 6 oder equilibriert nach den Ansprüchen 7 oder 8 verwendet werden.

**10.** Organosiliciumverbindungen mit Einheiten der Formel

$$E_aR_bSiX_cO_{\frac{4-(a+b+c)}{2}} \qquad (IV)$$

wobei R, X, a, b und c die oben dafür angegebene Bedeutung haben und E ein Rest der Formel

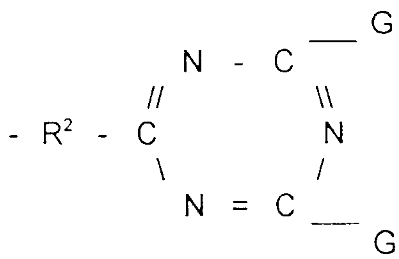

(V)

ist, wobei $R^2$ die oben dafür angegebene Bedeutung hat und G ein Chloratom, $-OR^1$, $-SR^1$, $-NR_2^1$ oder $-O-C(O)R^1$ bedeutet mit der Maßgabe, daß pro Polymermolekül mindestens ein Chloratom enthalten ist.

**11.** Verfahren zur Herstellung der Organosiliciumverbindung nach Anspruch 10, dadurch gekennzeichnet, daß daß Organosiliciumverbindungen mit Einheiten der Formel

$$D_aR_bX_cSiO_{(4-a-b-c)/2} \qquad (VIII),$$

wobei D ein Rest der Formel

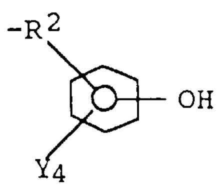

(IX)

ist und Y gleich oder verschieden ist, ein Wasserstoffatom, einen linearen oder verzweigten Alkylrest, oder einen Rest der Formel $-OR^1$ oder -X bedeutet,

R, $R^1$, $R^2$, X, a, b und c die angegebene Bedeutung haben, mit substituiertem oder unsubstituiertem Cyanurhalogenid, unter Verwendung von Basen polymeranalog umgesetzt werden.

## Claims

**1.** Oxyalkylene-group-containing organosilicon compounds containing units of the formula

$$A_aR_bSiX_cO_{\frac{4-(a+b+c)}{2}} \quad \text{(I)},$$

where R is identical or different, and denotes a monovalent halogenated or nonhalogenated hydrocarbon radical,
X is identical or different and is a chlorine atom or a radical of the formula $-OR^1$, where $R^1$ denotes an alkyl radical which can be substituted by an ether oxygen atom,
a is 0 or 1,
b is 0, 1, 2 or 3,
c is 0, 1, 2 or 3 and the total $a+b+c \leq 4$ and
A is a radical of the formula

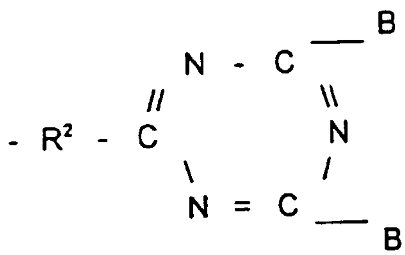

(II)

where $R^2$ signifies an unbranched or branched substituted or unsubstituted divalent hydrocarbon radical, which may or may not contain ether, amine, sulphide, ester, amide, carbonate, urea and urethane groups,
B is identical or different, and denotes X, $-NR_2^1$, $-O-C(=O)-R^1$, $-SR^1$ or a radical of the formula

$$-NR^3R^2\,[0\text{-}CH(CH_3)\text{-}CH_2]_d\,[OCH_2CH_2]_e\,[O(CH_2)_4]_f\,OR^4 \quad \text{(III)},$$

where X, $R^1$ and $R^2$ have the meanings given for these above, $R^3$ is identical or different and is a hydrogen atom or has the meaning of R, $R^4$ has the meaning of $R^3$ or signifies a radical of the formula

$$-C(=O)\text{-}R,\ -R^2NR_2^{\ 3},\ -NR^3R^2\text{-},\ -R^2NR_2^{\ 3}H^+X^-,$$

d, e and f are an integer from 0 to 200, with the proviso that the sum $d+e+f \geq 1$ and B contains at least one radical of the formula (III) per polymer molecule.

**2.** Oxyalkylene-group-containing organosilicon compounds according to Claim 1, characterized in that B is a chlorine atom or radicals of the formula

$$-NH\text{-}CH(CH_3)\text{-}CH_2\ (OCH_2CH_2)_e\ OCH_2\text{-}CH(CH_3)\text{-}NH_3^{\ +}Cl^-$$

$$-NH\text{-}CH(CH_3)\text{-}CH_2\ (OCH(CH_3)\text{-}CH_2)_e\ OCH_2\text{-}CH(CH_3)\text{-}NH_3^{\ +}Cl^-$$

$$-NH\text{-}CH(CH_3)\text{-}CH_2\text{-}\ (OCH_2CH_2)_e\ OCH_2\text{-}CH(CH_3)\text{-}NH\text{-}$$

$$-NH\text{-}CH(CH_3)\text{-}CH_2\text{-}\ (OCH(CH_3)\text{-}CH_2)_e\ OCH_2\text{-}CH(CH_3)\text{-}NH\text{-}$$

$$-NH-CH(CH_3)-CH_2\ (OCHR_3CH_2)_e\ OCH_3$$

$$-NH\ (CH_2)_3\ (OCH_2CH_2)_e\ O-CH_3,$$

$$-NH\ (CH_2)_3\ (OCH(CH_3)-CH_2)_e\ OCH_3$$

where e can be 2, 3, 12, 18 and 44.

**3.** Oxyalkylene-group-containing organosilicon compound according to Claim 1, characterized in that it is a compound of the formula

$$A_gR_{3-g}SiO(SiR_2O)_n(SiRAO)_mSiR_{3-g}A_g \quad \text{(VII)},$$

where A and R have the meaning specified therefor above, g is 0, 1 or 2, n is 0 or an integer from 1 to 1500 and m is 0 or an integer from 1 to 200, with the proviso that at least one radical A is present per molecule.

**4.** Process for preparing oxyalkylene-group-containing organosilicon compounds according to Claims 1 to 3, characterized in that organosilicon compounds containing units of the formula

$$E_aR_bSiX_cO_{\frac{4-(a+b+c)}{2}} \quad \text{(IV)}$$

where R, X, a, b and c have the meaning specified therefor above and E is a radical of the formula

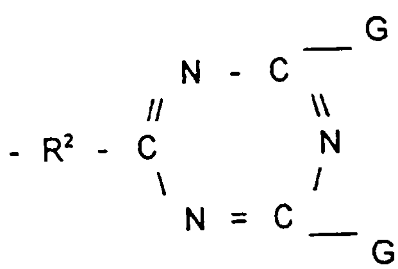

(V)

where $R^2$ has the meaning specified therefor above and G denotes a chlorine atom, $-OR^1$, $-SR^1$, $-NR_2^1$ or $-O-C(O)R^1$, with the proviso that at least one chlorine atom is present per polymer molecule,

are reacted with an amine-functionalized polyoxyalkylene of the formula

$$HNR^3-R^2\ [OCH(CH_3)-CH_2]_d\ [O-CH_2-CH_2]_e\ [O(CH_2)_4]_f\ OR^5 \quad \text{(VI)}$$

where $R^2$, $R^3$, d, e and f have the meaning specified therefor above, $R^5$ has the meaning of $R^3$ or signifies a radical of the formula

$$-C(=O)-R,\ -R^2R_2^{\ 3}N,$$

in the absence or presence of bases in organic solvents, in water or in mixtures of the two.

**5.** Process for preparing oxyalkylene-group-containing organosilicon compounds according to Claim 4, characterized in that the organosilicon compounds IV are organopolysiloxanes of the formula

$$E_gR_{3-g}SiO(SiR_2O)_n(SiRBO)_mSiR_{3-g}E_g \qquad \text{(IVa)},$$

where E, R, g, n and m have the meaning specified therefor above.

**6.** Process for preparing oxyalkylene-group-containing organosilicon compounds according to Claim 4 or 5, characterized in that E is a radical of the formulae

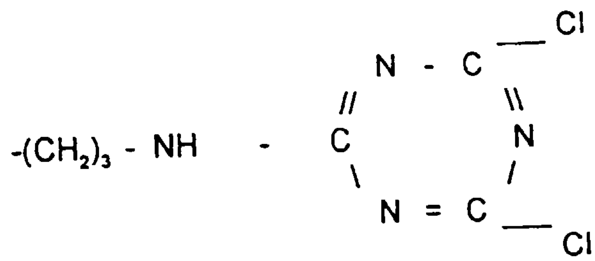

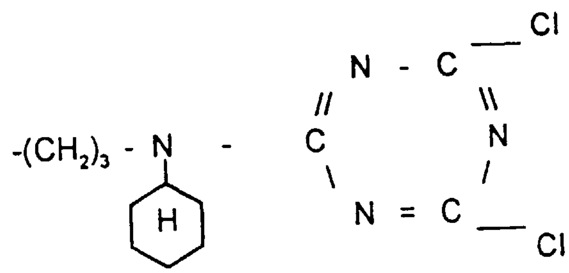

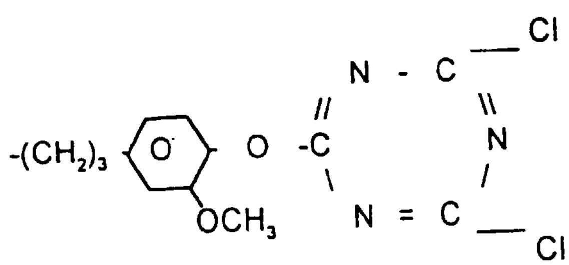

.

**7.** Equilibration of the oxyalkylene-group-containing organosilicon compounds according to one or more of Claims 1 to 3 or prepared by one or more of Claims 4 to 6, characterized in that the oxyalkylene-group-containing organosilicon compounds are equilibrated with organopolysiloxanes selected from the group consisting of unbranched terminal-triorganosiloxy group-containing organopolysiloxanes, unbranched terminal-hydroxyl-group-containing organopolysiloxanes, cyclic organopolysiloxanes and mixed polymers of diorganosiloxane and monoorganosiloxane units.

**8.** Equilibration of the oxyalkylene-group-containing organosilicon compounds according to Claim 7, characterized in that the linear terminal-triorganosiloxy-group-containing organopolysiloxanes used are those of the formula

$$R_3SiO(SiR_2O)_rSiR_3,$$

where R has the meaning specified therefor above and r is 0 or an integer from 1 to 1500, the linear terminal-hydroxyl-group-containing organopolysiloxanes used are those of the formula

$$HO(SiR_2O)_sH,$$

where R has the meaning specified therefor above and s is an integer from 1 to 1500, the cyclic organopolysiloxanes used are those of the formula

$$(R_2SiO)_t,$$

where R has the meaning specified therefor above and t is an integer from 3 to 12, and the mixed polymers used are those of units of the formula

$$R_2SiO$$

and

$$RSiO_{3/2},$$

where R has the meaning specified therefor above.

**9.** Process for treating woven textile fabrics, textile fibre preparations and leather treatment, characterized in that oxyalkylene-group-containing organosilicon compounds are used according to one or more of Claims 1 to 3 or prepared according to one or more of Claims 4 to 6 or equilibrated according to Claims 7 or 8.

**10.** Organosilicon compounds having units of the formula

$$E_aR_bSiX_cO_{\frac{4-(a+b+c)}{2}} \qquad (IV)$$

where R, X, a, b and c have the meaning specified therefor above and E is a radical of the formula

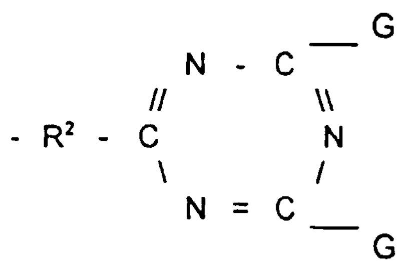

(V)

where $R^2$ has the meaning specified therefor above and G denotes a chlorine atom, $-OR^1$, $-SR^1$, $-NR_2^1$ or $-O-C(O)R^1$, with the proviso that at least one chlorine atom is present per polymer molecule.

**11.** Process for preparing the organosilicon compound according to Claim 10, characterized in that, organosilicon compounds containing units of the formula

$$D_aR_bX_cSiO_{(4-a-b-c)/2} \qquad (VIII),$$

where D is a radical of the formula

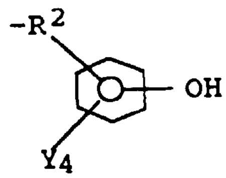

(IX)

and Y is identical or different and denotes a hydrogen atom, an unbranched or branched alkyl radical or a radical of the formula $-OR^1$ or -X,

R, $R^1$, $R^2$, X, a, b and c have the specified meaning, are reacted in a polymer-analogous manner with substituted or unsubstituted cyanuric halide, using bases.

**Revendications**

1. Composés organosiliciés renfermant des groupes oxyalkylène, ayant des motifs de formule

$$A_aR_bSiX_cO_{\frac{4-(a+b+c)}{2}} \qquad (I),$$

dans laquelle R est identique ou différent, et représente un radical hydrocarboné monovalent, halogéné ou non halogéné, X est identique ou différent et représente un atome de chlore ou un radical de formule $-OR^1$ dans laquelle $R^1$ représente un radical alkyle qui peut être substitué par un atome d'oxygène d'éther,
a vaut 0 ou 1
b vaut 0, 1, 2 ou 3,
c vaut 0, 1, 2 ou 3 et la somme $a+b+c \leq 4$ et
A est un radical de formule

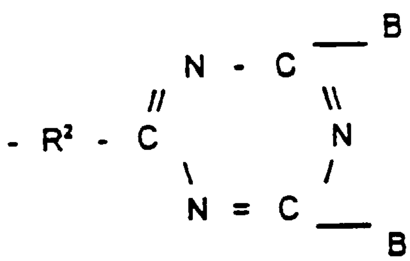

(II)

dans laquelle $R^2$ représente un radical hydrocarboné bivalent, linéaire ou ramifié, substitué ou non substitué, qui peut renfermer ou non des groupes éther, amine, sulfure, ester, amide, carbonate, urée et urétane,
B est identique ou différent, et représente X, $-NR_2^1$, $-O-C(=O)-R^1$, $-SR^1$ ou un radical de formule

$$-NR^3R^2\,[O-CH(CH_3)-CH_2]_d\,[OCH_2CH_2]_e\,[O(CH_2)_4]_f\,OR^4 \qquad (III)$$

dans laquelle X, $R^1$ et $R^2$ ont les significations données ci-dessus à cet effet, $R^3$ est identique ou différent, et représente un atome d'hydrogène ou a la même signification que R, $R^4$ a la même signification que $R^3$ ou représente un radical de formule

$$-C(=O)-R,\ -R^2NR_2^3,\ -NR^3R^2-,\ -R^2NR_2^3H^+X^-$$

d, e et f sont un entier allant de 0 à 200, à condition que la somme d+e+f ≥ 1 et B renferme, par molécule polymère, au moins un radical de formule (III).

**2.** Composés organosiliciés renfermant des groupes oxyalkylène selon la revendication 1, caractérisés en ce que B est un atome de chlore ou un radical de formule

$$-NH-CH(CH_3)-CH_2\ (OCH_2CH_2)_e\ OCH_2-CH(CH_3)-NH_3^+Cl^-$$

$$-NH-CH(CH_3)-CH_2\ (OCH(CH_3-CH_2)_e\ OCH_2-CH(CH_3)-NH_3^+Cl^-$$

$$-NH-CH(CH_3)-CH_2-\ (OCH_2CH_2)_e\ OCH_2-CH(CH_3)-NH-$$

$$-NH-CH(CH_3)-CH_2-\ (OCH(CH_3)-CH_2)_e\ OCH_2-CH(CH_3)-NH-$$

$$-NH-CH(CH_3)-CH_2\ (OCHR_3CH_2)_e\ OCH_3$$

$$-NH\ (CH_2)_3\ (OCH_2CH_2)_e\ O-CH_3,$$

$$-NH\ (CH_2)_3\ (OCH(CH_3)-CH_2)_e\ OCH_3$$

où e peut valoir 2, 3, 12, 18 et 44.

**3.** Composés organosiliciés renfermant des groupes oxyalkylène selon la revendication 1, caractérisés en ce qu'ils sont des composés de formule

$$A_gR_{3-g}SiO(SiR_2O)_n(SiRAO)_mSiR_{3-g}A_g \qquad (VII)$$

dans laquelle A et R ont les significations données ci-dessus à cet effet, g vaut 0, 1 ou 2, n vaut 0 ou est un entier allant de 1 à 1500 et m vaut 0 ou est un entier allant de 1 à 200, à condition qu'au moins un radical A soit présent par molécule.

**4.** Procédé de préparation des composés organosiliciés renfermant des groupes oxyalkylène selon les revendications 1 à 3, caractérisé en ce que l'on fait réagir des composés organosiliciés ayant des motifs de formule

$$E_aR_bSiX_cO_{\frac{4-(a+b+c)}{2}} \qquad (IV)$$

dans laquelle R, X, a, b et c ont la signification donnée ci-dessus à cet effet et E est un radical de formule

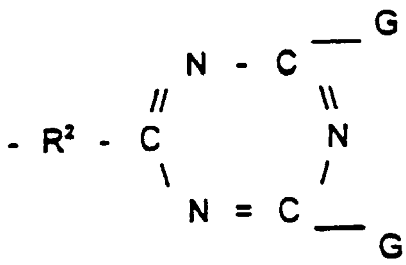

(V)

dans laquelle $R^2$ a la signification donnée ci-dessus à cet effet et G représente un atome de chlore, $-OR^1$, $-SR^1$, $-NR_2^1$ ou $-O-C(O)R^1$, à condition qu'au moins un atome de chlore soit présent par molécule polymère, avec un polyoxyalkylène à fonctionnalisation amine de formule

$$HNR^3-R^2\ [OCH(CH_3)-CH_2]_d\ [O-CH_2-CH_2]_e\ [O(CH_2)_4]_f\ OR^5 \qquad (VI)$$

dans laquelle $R^2$, $R^3$, d, e et f ont la signification donnée ci-dessus à cet effet, $R^5$ a la même signification que $R^3$ ou représente un radical de formule

$$-C(=O)-R,\ -R^2R_2^3N$$

en l'absence ou en présence de bases dans des solvants organiques, dans de l'eau ou dans des mélanges des deux.

**5.** Procédé de préparation des composés organosiliciés renfermant des groupes oxyalkylène selon la revendication 4, caractérisé en ce que les composés organosiliciés IV sont des organopolysiloxanes de formule

$$E_gR_{3-g}SiO(SiR_2O)_n(SiRBO)_mSiR_{3-g}E_g \qquad (IVa)$$

dans laquelle E, R, g, n et m ont la signification donnée ci-dessus à cet effet.

**6.** Procédé de préparation des composés organosiliciés renfermant des groupes oxyalkylène selon les revendications 4 ou 5, caractérisé en ce que E est un radical de formules

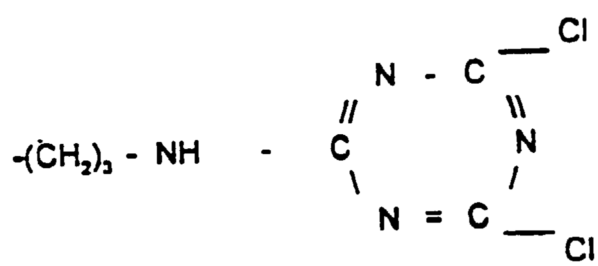

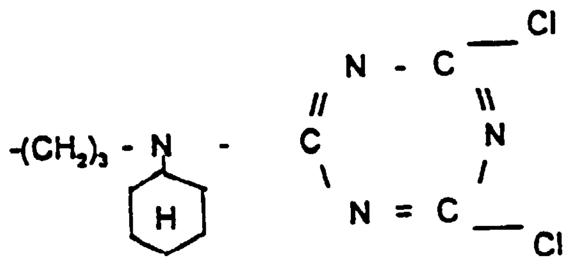

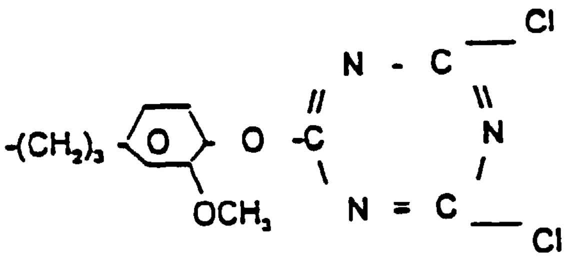

**7.** Equilibrage des composés organosiliciés renfermant des groupes oxyalkylène selon l'une ou plusieurs des revendications 1 à 3 ou préparés selon l'une ou plusieurs des revendications 4 à 6, caractérisé en ce que les composés organosiliciés renfermant des groupes oxyalkylène sont équilibrés avec des organopolysiloxanes choisis parmi le groupe constitué d'organopolysiloxanes linéaires renfermant des groupes triorganosiloxy terminaux, d'organopolysiloxanes linéaires renfermant des groupes hydroxyle terminaux, d'organopolysiloxanes cycliques et de copolymères à base de motifs diorganosiloxane et mono-organosiloxanes.

**8.** Equilibrage des composés organosiliciés renfermant des groupes oxyalkylène selon la revendication 7, caractérisé en ce que l'on utilise, en tant qu'organopolysiloxanes linéaires renfermant des groupes triorganosiloxy terminaux, ceux de formule

$$R_3SiO(SiR_2O)_rSiR_3,$$

dans laquelle R a la signification donnée ci-dessus à cet effet et r vaut 0 ou est un entier valant de 1 à 1 500, en tant qu' organopolysiloxanes renfermant des groupes hydroxyle, ceux de formule

$$HO(Sir_2O)_sH,$$

dans laquelle R a la signification donnée ci-dessus à cet effet et s est un entier valant de 1 à 1500, en tant qu'organopolysiloxanes cycliques, ceux de formule

$$(R_2SiO)_t$$

dans laquelle R a la signification donnée ci-dessus à cet effet et t est un entier allant de 3 à 12, et en tant que copolymères, ceux à base de motifs, de formules

$$R_2SiO$$

et

$$RSiO_{3/2},$$

dans lesquelles R a la signification donnée ci-dessus à cet effet.

**9.** Procédé de traitement d'étoffes tissées textiles, de préparations fibreuses textiles et de traitement du cuir, caractérisé en ce que l'on utilise des composés organosiliciés renfermant des groupes oxyalkylène selon l'une ou plusieurs des revendications 1 à 3 ou préparés selon l'une ou plusieurs des revendications 4 à 6 ou équilibrées selon les revendications 7 ou 8.

**10.** Composés organosiliciés ayant des motifs de formule

$$E_aR_bSiX_cO_{\frac{4-(a+b+c)}{2}} \qquad (IV)$$

dans laquelle R, X, a, b et c ont la signification donnée ci-dessus à cet effet et E est un radical de formule

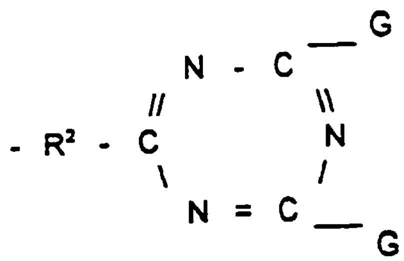

(V)

dans laquelle $R^2$ a la signification donnée ci-dessus à cet effet et G représente un atome de chlore, $-OR^1$, $-SR^1$, $-NR_2{}^1$ ou $-O-C(O)R^1$, à condition qu'au moins un atome de chlore soit présent par molécule polymère.

**11.** Procédé de préparation du composé organosilicié selon la revendication 10, caractérisé en ce que l'on fait réagir, de manière analogue à un polymère, des composés organosiliciés ayant des motifs de formule

$$D_aR_bX_cSiO_{(4-a-b-c)/2} \qquad (VIII),$$

dans laquelle D est un radical de formule

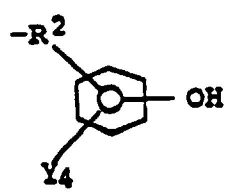

(IX)

et Y est identique ou différent, et représente un atome d'hydrogène, un radical alkyle linéaire ou ramifié ou un radical de formule $-OR^1$ ou -X,
R, $R^1$, $R^2$, X, a, b et c ayant la signification donnée, avec un halogénure cyanurique substitué ou non substitué, en employant des bases.